# EUROPÄISCHE PATENTSCHRIFT

(11) **EP 0 460 366 B1**
(45) Veröffentlichungstag und Bekanntmachung des Hinweises auf die Patenterteilung: **03.08.1994**
(21) Anmeldenummer: 91104481.6
(22) Anmeldetag: 22.03.1991
(51) Int. Cl.: F16J 15/32

(54) **Wellenabdichtung**
Shaft seal
Joint à lèvre

(30) Priorität: 07.06.1990 DE 4018215
(43) Veröffentlichungstag der Anmeldung: 11.12.1991
(73) Patentinhaber: GOETZE Elastomere GmbH, D-51379 Leverkusen-Opladen (DE)
(72) Erfinder: Jung, Norbert, Dipl.-Ing., W-5000 Köln 1 (DE)

(56) Entgegenhaltungen:
- EP-A- 0 270 938
- DE-C- 3 631 887
- DE-C- 3 734 149

## Beschreibung

Die Erfindung betrifft eine Wellenabdichtung aus einem Wellendichtungsring zur Abdichtung rotierender Wellen und einem den Wellendichtungsring aufnehmenden Gehäuse, bei dem der Wellendichtungsring aus gegebenenfalls gefüllten Polytetrafluorethylenen oder einem artverwandten Werkstoff besteht und sowohl einen Radialschenkel am Innenumfang besitzt, der zur Dichtlippe abgebogen abdichtend auf der rotierenden Welle aufliegt, als auch einen Axialschenkel am Außenumfang besitzt, der gegebenenfalls durch Federkraft angepreßt an einer Aufnahmebohrung des aufnehmenden, die Welle konzentrisch umgebenden Gehäuses statisch abdichtend anliegt.

Wellendichtungsringe der beschriebenen Art sind aus der DE-OS 38 21 353 bekannt. Die Wellendichtungsringe bestehen massiv aus gegebenenfalls gefüllten Polytetrafluorethylenen beziehungsweise einem artverwandten Werkstoff und sind spanabhebend aus entsprechenden Rohlingen herausgearbeitet oder durch Sintern von Polytetrafluorethylen in der Form hergestellt. Der Axialschenkel besitzt entsprechend der Form der Aufnahmebohrung im Gehäuse einen etwa rechteckigen Querschnitt und zur Erzielung eines Preßsitzes im Gehäuse eine Überdeckung zum Innendurchmesser der Aufnahmebohrung. Zur Versteifung und Verstärkung des Dichtungsringes ist die radiale Wandstärke des Axialschenkels verhältnismäßig groß und liegt bevorzugt bei etwa einem Drittel bis zu einer Hälfte der gesamten radialen Wandstärke des gesamten Dichtungsringes.

Zum besseren Sitz des Wellendichtungsringes im Gehäuse können nach der DE-OS 38 21 353 radial nach außen spannende Federringe am Innenumfang des Axialschenkels angeordnet sein, und Elastomerringe in Nuten am Außenumfang des Axialschenkels können zusätzlich zur besseren statischen Abdichtung verwendet werden.

Gegebenenfalls mit Füllstoffen versehene Polytetrafluorethylene und artverwandte Werkstoffe besitzen vor allem eine gute Medienbeständigkeit und eine hohe Temperaturbeständigkeit bei gleichzeitig geringem Reibungswert. Wellendichtungsringe aus Polytetrafluorethylenen werden daher vor allem an problematischen Dichtstellen mit aggressiven Abdichtmedien und/oder Temperaturbelastung und bei hoher Reibbelastung, bei Mangelschmierung oder bei Trockenlauf eingesetzt.

Problematisch beim Werkstoff Polytetrafluorethylen ist vor allem sowohl die schlechte Haftung an anderen Werkstoffen als auch das plastische Fließen von Polytetrafluorethylen unter Druckbelastung. Bei den vorbekannten, massiv aus Polytetrafluorethylen bestehenden Wellendichtungsringen besitzen die Wellendichtungsringe keine aufwendigen und störungsanfälligen Klebverbindungen, und die Wellendichtungsringe sind aus dieser Sicht unproblematisch einsetzbar. Das Problem des plastischen Fließens des Polytetrafluorethylen ist aber durch diese Konstruktionen nicht gelöst. Beobachtet wurde, daß schon beim Eindrücken der mit leichtem Übermaß am Außenumfang gefertigten Wellendichtungsringe in die Aufnahmebohrung das Polytetrafluorethylen plastisch sich verformte, ein drehfester Preßsitz im Wellengehäuse überhaupt nicht zustande kam und die Ringe im Haftteil praktisch von Anfang an undicht waren.

Die beschriebenen Maßnahmen zur Abhilfe, nämlich radial nach außen spannende Federringe am Innenumfang der Axialschenkel und/oder in Nuten am Außenumfang des Axialschenkels eingesetzte Elastomerringe, verbesserten zwar den Preßsitz und die Abdichtung der Wellendichtungsringe in der Aufnahmebohrung bei der Montage, der Preßsitz der Wellendichtungsringe wird durch das Fließen des Polytetrafluorethylen trotzdem allmählich gelockert, und die Dichtung wird im Betrieb mit der Zeit undicht.

Der vorliegenden Erfindung liegt daher die Aufgabe zugrunde, eine Wellenabdichtung gemäß Oberbegriff des Hauptpatentanspruches zu schaffen, bei der durch konstruktive Gestaltung der Sitzflächen des Wellendichtungsringes und/oder des aufnehmenden Gehäuses ein optimaler Sitz des Ringes im Gehäuse bei gleichzeitig guter statischer Abdichtung mit möglichst langer Lebensdauer im Betrieb gewährleistet ist.

Erfindungsgemäß wird diese Aufgabe durch eine Wellenabdichtung gelöst, bei der die radiale Sitzfläche der Aufnahmebohrung im Gehäuse mindestens eine ringförmig umlaufende profilierte Ringnut besitzt. Bevorzugt besitzt dabei die radiale Sitzfläche der Aufnahmebohrung mehrere axial hintereinander angeordnete profilierte Ringnuten, und die Ringnuten besitzen bevorzugt einen dreieckigen Querschnitt.

In Versuchen wurde überraschend gefunden, daß die verwendeten Wellendichtungsringe aus Polytetrafluorethylenen nach dem Einpressen in die erfindungsgemäß mit ringförmig umlaufenden Nuten versehenen Aufnahmebohrungen sicher und fest in der Aufnahmebohrung saßen. Die Wellendichtungsringe waren im Betrieb nicht mehr axial verschiebbar, und an den Sitzflächen im Haftteil traten auch nach längerer Betriebszeit keine Leckagen durch das Abdichtmedium mehr auf.

Offenbar fließt jetzt das Polytetrafluorethylen im Sitzflächenbereich der mit Übermaß gefertigten Wellendichtungsringe beim Einpressen in die Aufnahmebohrung unter dem Druck in die ringförmigen Nuten ein und füllt sie abdichtend aus. Das entstandene Profil in der Sitzfläche des Wellendichtungsringes verhakt sich dabei in den Nuten der Aufnahmebohrung, und ein axiales Verschieben des Wellendichtungsringes wird unmöglich. Zur besseren Verhakung besitzen die ringförmigen Nuten des Aufnahmesitzes bevorzugt einen sägezahnförmigen Querschnitt mit steilerem Anstieg zur Montageseite. Zusätzlich ist das Gesamtvolumen der ringförmigen umlaufenden Nuten in der Aufnahmebohrung größer oder gleich dem Volumen des beim Einpressen verdrängten Polytetrafluorethylen. Dadurch ist das Polytetrafluorethylen nach dem Einpressen unter plastischem Fließen des Polytetrafluorethylen im Sitzbereich druckentlastet, und ein weiteres plastisches Fließen findet nicht mehr statt. Der Wellendichtungsring ist mit seiner Sitzfläche der Aufnahmebohrung optimal angepaßt, ohne daß weitere Verformungen auftreten können. Der Dichtungsring ist dadurch mit langer Lebensdauer einsetzbar.

Im Sinne einer weiteren Ausgestaltung der Erfindung ist es auch möglich, den Wellendichtungsring an seiner Sitzfläche mit umlaufenden, elastisch radial nach außen federnden Vorsprüngen zu versehen. Die Aufnahmebohrungssitzfläche besitzt dann korrespondierend eine umlaufende Nut, in die der beim Einschieben des Wellendichtungsringes elastisch verformte Vorsprung einschnappt. Zusätzlich brauchen, falls erforderlich, Vorsprünge und Nuten in der Aufnahmesitzfläche nicht unbedingt ringförmig umlaufend zu sein, und sie können sich nur auf einen relativ kurzen Sektor der ringförmigen Umlaufbahn erstrecken. Dadurch ist der Ring zusätzlich vor einem möglichen Verdrehen unter extremen Betriebsbedingungen gesichert.

Durch die Erfindung ist somit eine relativ einfach herzustellende Wellenabdichtung geschaffen, bei der der Wellendichtungsring optimal elastisch abdichtend und gegen axiales Verschieben gesichert in der Aufnahmbohrung des Gehäuses befestigt ist. Die erfindungsgemäße Wellenabdichtung ermöglicht es so, an problematischen Dichtstellen Wellendichtungsringe aus Polytetrafluorethylenen oder artverwandten Werkstoffen mit langer Lebensdauer einzusetzen.

Die Erfindung wird durch die beiden Abbildungen näher erläutert, die im Querschnitt zwei bevorzugte Ausführungsformen der Erfindung zeigen.

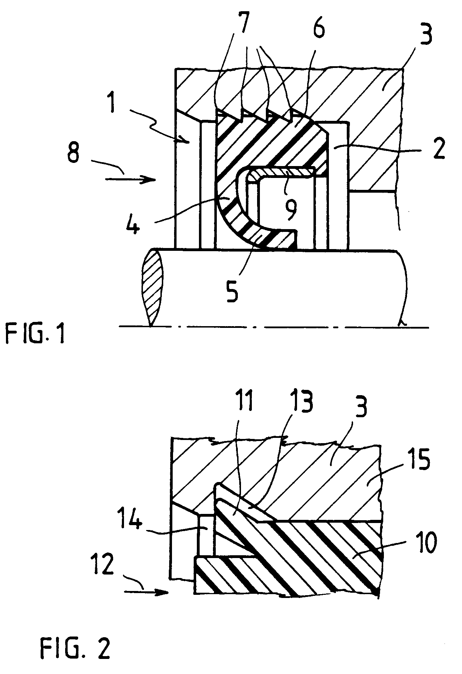

Figur 1 zeigt im Querschnitt das Wellenabdichtungssystem (1) mit in die Aufnahmebohrung (2) des Gehäuses (3) eingepreßtem Wellendichtungsring (4) aus Polytetrafluorethylen mit zur Dichtlippe abgebogenem Radialschenkel (5) am Innenumfang und dem das Haftteil bildenden Axialschenkel (6) am Außenumfang. Der Außendurchmesser des Wellendichtungsringes (4) ist etwas größer als der Innendurchmesser der Aufnahmebohrung, so daß beim Einschieben des Wellendichtungsringes (4) in die Aufnahmebohrung (2) in Pfeilrichtung (8) das Polytetrafluorethylen des Axialschenkels (6) druckbelastet wird und plastisch in die vier axial hintereinander angeordneten, ringförmig umlaufenden Nuten (7) der Aufnahmebohrung (2) einfließt. Die Nuten (7) werden abgedichtet, und durch ihr sägezahnförmiges Profil mit zur Montageseite steilerem Anstieg der Nutwandung wird der Wellendichtungsring (4) vor einem axialen Verschieben im Betrieb gesichert. Das Volumen der Nuten (7) ist größer als das Volumen des beim Einpressen des Wellendichtungsringes (4) verformten Polytetrafluorethylen, so daß der Axialschenkel (6) druckentlastet wird und ein weiteres Verformen nicht mehr stattfinden kann. Der am Innenumfang des Axialschenkels (6) angeordnete Spannring (9) fördert bei der Montage das Fließen des Polytetrafluorethylen, nach der Montage versteift er den Axialschenkel (6) und verhindert gegebenenfalls weiteres Fließen des Polytetrafluorethylen zum Innenumfang. Der Wellendichtungsring (4) ist dadurch mit langer Lebensdauer betriebssicher gegenüber Leckage und Lockerung des Sitzes in die Aufnahmebohrung (2) des Gehäuses (3) eingepreßt.

Figur 2 zeigt einen Wellendichtungsring (10) mit einem Vorsprung (11) am Außenumfang, der beim Einschieben in Pfeilrichtung (12) bei der Montage zunächst elastisch verformt wird und dann in die Nut (13) der Aufnahmebohrung (14) des Gehäuses (15) einschnappt. Nut (13) und Vorsprung (11) besitzen einen sägezahnförmigen Querschnitt mit montageseitigem (12), steilerem Anstieg, so daß der Sitz des Wellendichtungsringes (10) in der Aufnahmebohrung (14) vor einem axialen Verschieben im Betrieb gesichert ist. In diesem Fall sind die Nut (13) und der Vorsprung (11) ringförmig umlaufend ausgebildet.

In einem weiteren, nicht dargestellten Ausführungsbeispiel der Erfindung kann der Vorsprung und korrespondierend die Nut sich nur auf einen kleinen Sektor der Umfangsfläche erstrecken und dadurch den Wellendichtungsring vor Verdrehungen im Betrieb sichern.

## Patentansprüche

1. Wellenabdichtung aus einem Wellendichtungsring zur Abdichtung rotierender Wellen und einem den Wellendichtungsring aufnehmenden Gehäuse, bei dem der Wellendichtungsring aus gegebenenfalls gefüllten Polytetrafluorethylenen oder einem artverwandten Werkstoff besteht und sowohl einen Radialschenkel am Innenumfang besitzt, der zur Dichtlippe abgebogen abdichtend auf der rotierenden Welle aufliegt, als auch einen Axialschenkel besitzt, der gegebenenfalls durch Federkraft angepreßt in einer Aufnahmebohrung des aufnehmenden, die Welle konzentrisch umgebenden Gehäuses statisch abdichtend anliegt, dadurch gekennzeichnet, daß die axiale Sitzfläche der Aufnahmebohrung (2) im Gehäuse (3) mindestens eine ringförmig umlaufende profilierte Ringnut (7) besitzt.

2. Wellenabdichtung nach Anspruch 1, dadurch gekennzeichnet, daß die Sitzfläche der Aufnahmebohrung (2) im Gehäuse (3) mehrere axial hintereinander angeordnete Nuten (7) besitzt.

3. Wellenabdichtung nach den Ansprüchen 1 und 2, dadurch gekennzeichnet, daß der Querschnitt der Ringnuten (7) dreieckig ist.

4. Wellenabdichtung nach den Ansprüchen 1 bis 3, dadurch gekennzeichnet, daß der Querschnitt der Ringnuten (7) sägezahnförmig mit zur Montageseite (8) steilerem Anstieg der Nutwandung ist.

5. Wellenabdichtung nach den Ansprüchen 1 bis 4, dadurch gekennzeichnet, daß die Sitzfläche des Wellendichtungsringes (10) einen radial nach außen vorstehenden und elastisch federnd verformbaren Vorsprung (11) aufweist, der beim Einschieben des Wellendichtungsringes (10) in Pfeilrichtung (12) zunächst elastisch verformt wird und dann in eine korrespondierende Nut (13) der Aufnahmebohrung (14) im Gehäuse (15) einschnappt.

6. Wellenabdichtung nach den Ansprüchen 1 bis 5, dadurch gekennzeichnet, daß der Vorsprung und die Nut der Aufnahmebohrung sich abweichend von der ringförmig umlaufenden Form nur über einen schmalen Sektor der zylindrischen Sitzflächen erstrecken.

## Claims

1. Shaft seal consisting of a shaft sealing ring for sealing rotating shafts and a housing which receives the shaft sealring ring, in which the shaft sealing ring is made of polytetrafluorethylenes, which may be filled if occasion arises, or a related material, and has both a radial arm at the inner circumference which, bent aside to form a sealing lip, rests sealingly on the rotating shaft, and an axial arm which, biased by spring force if occasion arises, abuts in statically sealing relationship in a receiving bore of the receiving housing which concentrically surrounds the shaft, characterised in that the axial fitting surface of the receiving bore (2) in the housing (3) has at least one annular peripheral profiled groove (7).

2. Shaft seal according to claim 1, characterised in that the fitting surface of the receiving bore (2) in the housing (3) has several grooves (7) arranged axially one behind the other.

3. Shaft seal according to claims 1 and 2, characterised in that the cross-section of the annular grooves (7) is triangular.

4. Shaft seal according to claims 1 to 3, characterised in that the cross-section of the annular grooves (7) is sawtooth-shaped with a steeper ascent of the groove wall to the assembly side (8).

5. Shaft seal according to claims 1 to 4, characterised in that the fitting surface of the shaft sealing ring (10) comprises a radially outwardly protruding and elastically spring-deformable projection (11) which, on insertion of the shaft sealing ring (10) in the arrow direction (12), is first elastically deformed and then catches in a corresponding groove (13) of the receiving bore (14) in the housing (15).

6. Shaft seal according to claims 1 to 5, characterised in that the projection and the groove of the receiving bore, deviating from the annular peripheral form, extend over only a narrow sector of the cylindrical fitting surfaces.

## Revendications

1. Joint à lèvre consistant en un joint d'arbre annulaire pour l'étanchéité d'arbres rotatifs et d'un carter recevant le joint d'arbre annulaire, dans lequel le joint d'arbre annulaire est éventuellement constitué en polytétrafluoréthhylène rempli ou en un matériau apparenté et présente non seulement une bride radiale sur sa périphérie intérieure, qui repose sur l'arbre rotatif de facon étanche et courbée par rapport à la lèvre d'étanchéité, mais encore une bride axiale qui, éventuellement, repose de facon étanche et statique par appui élastique dans un alésage de réception du carter récepteur qui entoure l'arbre de facon concentrique, caractérisé en ce que la surface d'appui axiale de l'alésage de réception (2) dans le carter (3) présente au moins une rainure (7) de joint périphérique profilée de forme annulaire.

2. Joint à lèvre selon la revendication 1, caractérisé en ce que la surface d'appui de l'alésage de réception (2) dans le carter (3) présente plusieurs rainures (7) disposées axialement les unes derrière les autres.

3. Joint à lèvre selon les revendications 1 et 2, caractérisé en ce que la section transversale des rainures (7) de joint est triangulaire.

4. Joint à lèvre selon les revendications 1 à 3, caractérisé en ce que la section transversale des rainures (7) de joint est en forme de dents de scie avec une pente plus raide de la paroi de rainure du côté montage (8).

5. Joint à lèvre selon les revendiations 1 à 4, caratérisé en ce que la surface d'appui du joint d'arbre annulaire (10) présente une projection (11) saillant radialement vers l'extérieur et déformable élastiquement, qui, lors de l'emmanchement du joint d'arbre annulaire (10) dans le sens de la flèche (12) est d'abord déformée élastiquement puis s'encliquette dans une rainure correspondante (13) de l'aléasage de réception (14) dans le carter (15).

6. Joint à lèvre selon les revendications 1 à 5, caractérisé en ce que la projetion et la rainure de l'alésage de réception ne s'étendent, en s'écartant de la forme annulaire périphérique, que sur un secteur étroit des surfaces d'appui cylindriques.
